# EUROPEAN PATENT SPECIFICATION

(11) **EP 3 128 305 B1**
(45) Date of publication and mention of the grant of the patent: **31.07.2019**
(21) Application number: 15180231.1
(22) Date of filing: 07.08.2015
(51) Int. Cl.: G01L 19/06, G01L 19/14

(54) **A HERMETIC PRESSURE SENSOR**
HERMETISCHER DRUCKWANDLER
CAPTEUR DE PRESSION HERMÉTIQUE

(43) Date of publication of application: 08.02.2017
(73) Proprietor: Sensata Technologies, Inc., Attleboro, MA 02703 (US)
(72) Inventor: Jacobs, Frank Hendri, 8107 AJ Broekland (NL); Hopman, Wico, 7425 EH Deventer (NL); Talsma, Jochem Hendrik, 7422 SR Deventer (NL); Nijs, Jochem Christiaan, 7533 VH Enschede (NL); Hop, Erik, 3814 TW Amersfoort (NL)
(74) Representative: de Hoog, Johannes Hendrik

(56) References cited:
- WO-A2-2008/115346
- US-A1- 2014 033 824

## Description

### TECHNICAL FIELD

The invention relates to a hermetic pressure sensor. More particular the invention relates to a pressure sensor to be used in automatic transmission applications to measure the pressure of the transmission oil.

### BACKGROUND ART

The main task of a hermetic, i.e. gas-tight, pressure sensor is to measure pressure in harsh or dangerous environmental conditions. A first important reason to have a hermetic sensor is that the environment can damage the elements of the sensor which are enclosed in the housing of the sensor. Damage could make the sensor malfunctioning. A second important reason is to have a constant internal pressure which is important for low pressure sensing accuracy. In practice, a sensor housing is considered hermetic when during a Helium leak test, the leakage does not exceed the limit of approximately 5×10⁻⁸ mBar×l/sec He.

A hermetic pressure sensor is known from US6763724. This pressure sensor has a tubular port fitting and a tubular housing, which makes the design relatively high. A flange of the housing and the port fitting are welded to a support flange forming a hermetic seal. A compressive force on an O-ring forms a liquid-tight seal and maintains an axial load on the entire stack of components in the housing. Consequently, the housing is not gas-tight and the electrical elements are not hermetical sealed in the housing.

For transmission application there is a need for smaller fully hermetic sensors. This means that the sensor should have less height. Furthermore electronics of the sensor needs to be sealed from the measured media, in particular to prevent possible copper-sulfur corrosion.

Smaller pressure sensors are known from US20090282926A1 and US8516897B1. The sensors comprise a hermetic housing for the sensor element. The use a sensor chip having a glass base which is disposed in a hermetically sealed housing. A diaphragm is formed in the sensor chip. The glass base is fused to the housing to form a glass to metal seal. A glass to metal seal is a potential mode of failure in at least two cases: 1) a lack of a hermetic connection (e.g. due to a fault in the soldering process), 2) glass is a brittle material that may crack when pressure peaks and dynamic forces are applied. As the fluid pressure is acting directly on sensor chip, the glass base and connections (glass-silicon connection and glass-metal connection), there is a potential risk that the pressure sensor will malfunction due to damage of the glass base or any of the glass-connections.

US2014/033824A1 discloses a pressure detection device having a pressure detection module. The pressure detection module includes a receptacle part for receiving a carrier substrate. The carrier substrate is located on a first side with a pressure detection unit and is inserted into the receptacle part with a second side facing away from the first side. The carrier substrate is fixed with its second side on a base of a receptacle groove. The base has a contact opening through which contact surfaces of the carrier substrate are electrically contactable. The pressure detection unit is designed as a semiconductor pressure sensor using PorSi technology. A cavity is etched into the semiconductor in the ProSi technology, and this cavity has a new surface, a thin diaphragm, made of silicon grown over it under vacuum conditions to form a seal. The sensing elements are finally applied to the new surface. Through this technology, a reference vacuum is already integrated into the semiconductor pressure sensor, where by these semiconductor pressure sensors may be built particularly small.

WO2008115346A2 discloses a welded header for a pressure transmitter. The metal header includes at least one electrical feedthrough with a glass-to-metal seal. In an embodiment the glass-to-metal seal is formed in place by allowing melted glass to cool and solidify in the header such that the seal has high hermeticity.

### SUMMARY OF INVENTION

It is an object of the present invention to provide an improved hermetic pressure sensor with a gas-tight housing structure which is at least one of: reliable, cheaper to manufacture, producible in high volume by means of semi- or full automatic production processes, long lasting and/or robust to harsh pressure media, less sensitive to point forces acting on the sensor housing, withstanding the temperature and vibration typical of an automotive transmission application. The sensor can also be exploited for other automotive applications like liquid fuel pressure sensing and sensing oil pressure.

According to the invention, this object is achieved by a measuring plug having the features of claim 1. Advantageous embodiments and further ways of carrying out the invention may be attained by the measures mentioned in the dependent claims.

A hermetic pressure sensor according to the invention is defined by the features of claim 1.

These features provide a housing around the electronics in the housing which is hermetic. Hermetic in the context of the present application means gas-tight and not only liquid-tight. Furthermore, the part of the housing that is contact with the varying fluid pressure comprises material having substantially similar characteristics with respect to pressure and temperature and no brittle material is used that may crack when pressure peaks and dynamic forces are applied. As a consequence, the potential risk that the pressure sensor will malfunction due to damage of the housing is reduced significantly.

In an embodiment, the first housing structure comprises a bottom part and a membrane part. The bottom part comprises a pressure supply opening. The membrane part comprises the membrane section and is hermetically connected to the base part. The membrane section is in pressure contact with the fluid via a cavity between the bottom part and the membrane part and the pressure supply opening. This feature provides a structure wherein the bottom part protects the membrane for damage by external objects.

In a further embodiment, the bottom part and the membrane part are hermetically connected by an annular weld. A solid state welding process or any other suitable welding process could be used to locally join the two parts. As a result the new part does not comprise discontinuities in material characteristics. In this way, the risk of damage due to temperature and pressure shocks is reduced. In another embodiment with similar advantages, the first housing structure and the second housing structure are hermetically connected by an annular weld.

In an embodiment, the first housing structure comprises around the membrane section an annular wave-like section. By these features, the length of the material path between the exterior of the housing and the membrane section is extended. This reduces the sensitivity of the sensor for point forces acting on the exterior of the housing. In an embodiment, a cross section of the annular wave-like section comprises at least one U-turn-like shape.

In an alternative embodiment, the first housing structure further comprises an annular base part, an annular rigid part and an annular bending part, the membrane section is joined via subsequently the rigid part and the bending part to the base part, the rigid part having a thickness larger than the bending part. The bending part absorbs resultants of point forces acting on the exterior and the rigid part forms a barrier for the remaining forces due to the point forces. As a result of the sensitivity of the sensor for point forces or asymmetric forces acting on the housing is reduced significantly.

In a further embodiment, the bending part is at an angle with respect to the membrane section. This feature improves the bending characteristics for forces acting on the exterior of the housing which are parallel to the membrane and consequently the force absorption of the bending part.

The sensor according to the invention further comprises a PCB arranged in the housing, the at least one strain sensing element is electrically coupled to the PCB by bonding wires. This feature enables to mechanically uncouple to PCB and the membrane and to provide a reliable electrical connection between electronics on the PCB and the strain sensing element.

In a further embodiment, springy electrical connection elements couple electrically the electrical connection pins to the PCB. As a result of these features, a reliable electrical connection is established between the electrical connection pins and the PCB when closing the housing with the second housing structure. The electrical connection can withstand the vibration requirements. Some embodiments of springy electrical connection elements are an open-coil helical spring, S-shaped leaf spring and a U-shaped flat spring.

In an embodiment, the hermetic housing is disk-shaped. This feature enables to use the pressure sensor in applications where limited height is available for positioning the pressure sensor.

In an embodiment, the strain sensing element is a micro fused silicon strain gage.

Other features and advantages will become apparent from the following detailed description, taken in conjunction with the accompanying drawings which illustrate, by way of example, various features of embodiments.

### BRIEF DESCRIPTION OF THE DRAWINGS

These and other aspects, properties and advantages will be explained hereinafter based on the following description with reference to the drawings, wherein like reference numerals denote like or comparable parts, and in which:
Fig. 1 shows schematically an exploded view of a first embodiment of a pressure sensor;
Fig. 2 shows schematically a cross sectional view of the first embodiment;
Fig. 3 shows schematically a cross sectional view of a second embodiment of a pressure sensor;
Fig. 4 shows schematically a cross sectional view of a third embodiment of a pressure sensor; and,
Fig. 5 shows schematically a cross sectional view of a fourth embodiment.

### DESCRIPTION OF EMBODIMENTS

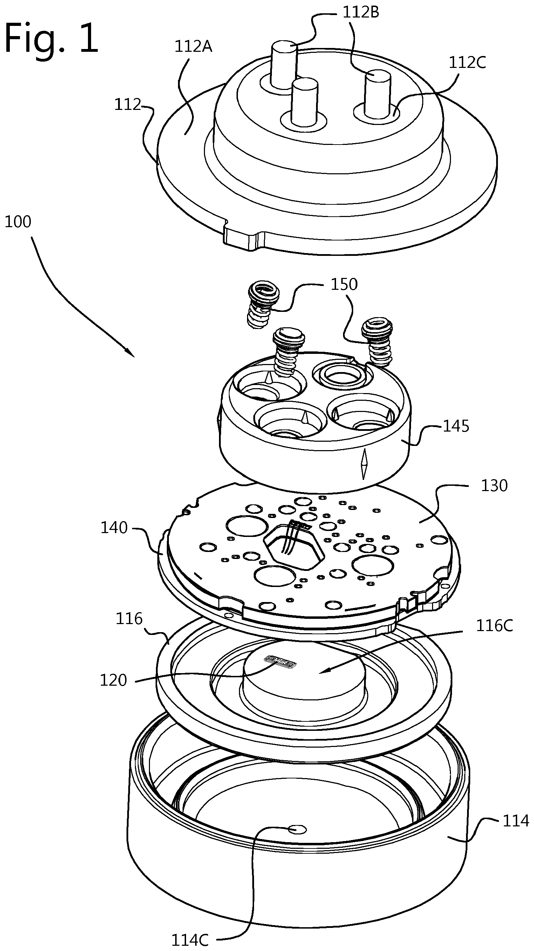

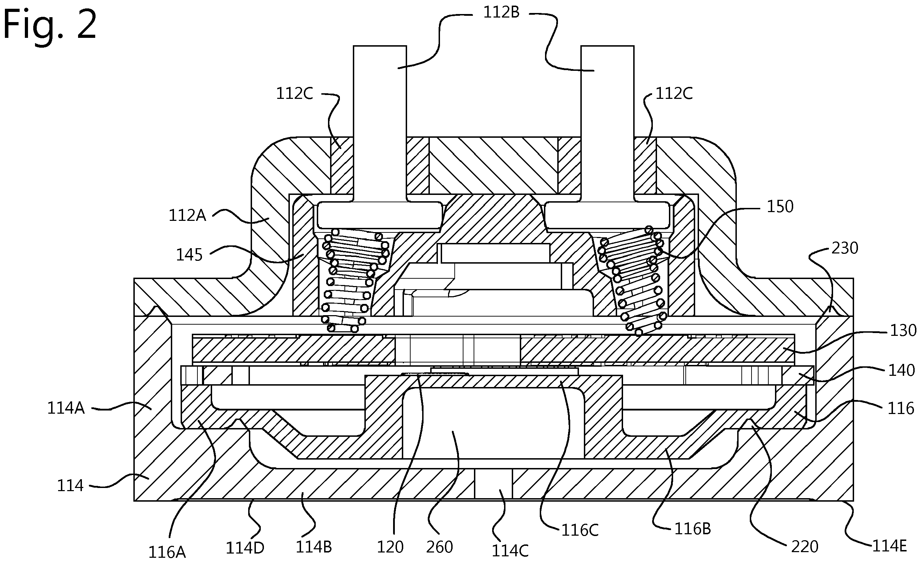

Figures 1 and 2 shows respectively an exploded view and sectional view of a first embodiment of a hermetic pressure sensor according to the present application. Hermetic in the context of the present application means completely airtight. The sensor is particularly designed for transmission applications wherein the electronics of the sensor needs to be sealed from the measured media, to prevent possible copper-sulphur corrosion. The sensor is robust, simple to manufacture, airtight and low-cost. The main task of the hermetic pressure sensor is to measure pressure in harsh or dangerous environmental conditions.

The pressure sensor comprises a hermetic disk shaped housing with a first housing structure 114 and a second housing structure 112. Disk-shaped in the context of the present application is: having a height smaller than the width of the housing. A height in the range of 0,75 cm - 1,5 cm has been found possible. The first housing structure comprises a metal bottom part 114 and a metal membrane part 116. The metal bottom part 114 and the membrane part 116 are hermetically connected by an annular weld 220. The bottom part 114 comprises a pressure supply opening 114C, a sealing surface part 114B and a side wall part 114A. Via the pressure supply opening 114C, the fluid can flow in a cavity 260 between the membrane part 116 and the bottom part 114. In this way, the first housing structure comprises a fluid facing outer surface which is formed by a fluid facing surface of the membrane part and the surface part of the bottom part that is in contact with the fluid to be measured.

The membrane part 116 comprises a membrane section 116C, an annular wave-like section 116B and an annular support section 116A. The annular wave-like section surrounds the membrane section 116C and the support section 116A surrounds the annular wave-like section 116B. The membrane section has a first thickness which is thinner than the thickness of the annular wave-like section and the support section. In the present embodiment, a cross section of the wave-like section includes a U-turn-like shape.

A strain sensing elements 120 is attached to the membrane section. A strain sensing element comprises two strain gages. A strain sensing element is positioned such that one strain gage is put into compression and the other strain gage is put into tension when a fluid pressure is applied on the fluid facing surface. The strain gages of the strain sensing element form a half bridge of a Wheatstone bridge. It might also be possible to use two strain sensing elements. The four strain gages of the two strain sensing elements are electrically coupled to form a full Wheatstone bridge. The angle between the line from the centre of the membrane to one of the strain sensing elements and the line from the centre of the membrane to another of the strain sensing elements is in an advantageous embodiment 90 degrees. The strain sensing element is preferably a micro fused silicon strain gage. In that case the strain gage is attached to the membrane section by glass material with the glass material bonded to both the strain gage and the membrane surface in accordance with conventional strain gage techniques. The concept of the present application could also applied with use of any other type of strain gages, such a semiconductor strain gages (piezoresistors), foil strain gages, thin film strain gages, thick film strain gages, polysilicon strain gages and capacitive strain gages

The second housing structure 112 comprises a metal housing part 112A with three openings and three electrical connection pins 112B. The three electrical connection pins 112 are affixed in the three openings by a non-conductive and hermetic sealing material 112C, for example glass. It should be noted that depending on the implementation, the pressure sensor comprises 2 or more electrical connection pins.

The first housing structure 114 and the second housing structure 112 are hermetically connected to each other by means of an annular weld 230. The first housing structure and the second housing structure form a compartment wherein a stack of components are positioned. The stack comprises a support ring 140, a PCB 130, springy electrical connection elements 150 and an alignment structure 145. The PCB 130 is provided with electronic circuitry. The electronic circuitry is arranged to perform at least one of the following actions: temperature compensation of electrical signals generated by the two strain sensing elements 120 forming the Wheatstone bridge, calibration, internal fault detection, converting the electrical signal(s) from the strain sensing elements to a conditioned measurement signal, i.e. a signal indicative of the fluid pressure. Bonding wires connect strain sensing elements to the electronic circuitry. The electronic circuitry could further be configured to perform the necessary calibration processes. The support ring is welded to a raised edge of the membrane part 116. The PCB is coupled to the support ring by mean is a reflow soldering process. The alignment structure 145 comprises openings to receive the springy electrical connection elements. In the present embodiment the springy electrical connections elements are in the form of an open-coil helical spring. The alignment structure 145 aligns first ends of the springy electrical connection elements 150 on contact areas on the PCB and aligns opposite second ends on the electrical connection pins 112B.

A characteristic of the annular wave-like section 116B is that the "wave" enlarges the mechanical path between membrane 116C section the outer surfaces of the hermetical housing. As a result of this, the sensor is less sensitive for point forces and uniform concentric forces acting on the housing. In use, an O-ring, not shown, is compressed between the sealing surface 114D of the housing and a surface of the device which fluid pressure has to be measured. The O-ring is centred around the pressure supply opening 114C. The sealing surface 114D is a recess with a small depth in the lower side of the housing. Flanges 114E around the sealing surface 114D protect the O-ring for to high compressing and damaging of the sealing surface in case the mounting force will become too high. The compression force of the O-ring will push the sealing surface part 114B upwards by a uniform concentric force around the supply opening. As a result of this the bottom part will deform and resultant forces will act on the annular support section 116A of the membrane part 116. The part of the wave-like section 116B with least thickness will deform and the stiff and rigid part of the wave-like section between the relative thin part of the wavelike section and the membrane section 116C will deform minimally. In this way, the influence of concentric and point forces acting on the housing on the surface of the membrane section 116C is reduced significantly. It should be noted that the deformation of the bottom side of the housing is larger as the size of the O-ring decreases. Furthermore, as "flexible" bonding wires are used to couple the strain sensing elements on the membrane section to the PCB, the membrane section is mechanically decoupled for force acting on PCB due to the springy electrical connection elements.

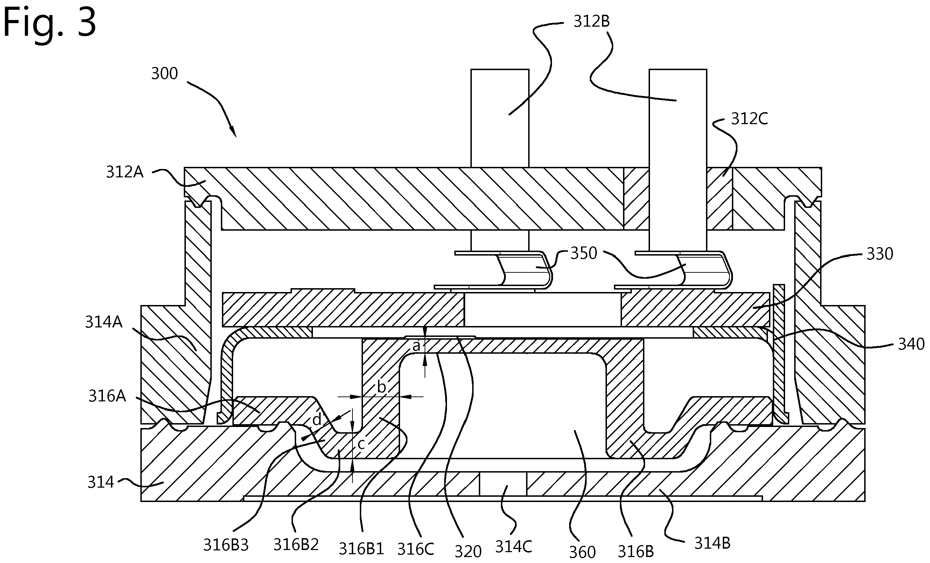

Figure 3 shows a cross sectional view of a second embodiment of a pressure sensor 300 according to the present application. The second embodiment differs mainly in the composition of the disk-shaped hermetic housing. The hermetic housing comprises a bottom part 314B, a membrane part 316A, a sidewall part 314A and a cover part 312A. The membrane part 316A is hermetically connected to the bottom part 314B by means of an annular weld. The sidewall part 314A is hermetically coupled to the bottom part 314B by means of an annular weld. The cover part 312A is hermetically coupled to the sidewall part 314A by means of an annular weld. Depending on the implementation of the manufacturing process, the assembly of the bottom part, membrane part and sidewall part form the first housing structure and the cover part the second housing structure or the assembly of bottom part and the membrane part form the first housing structure and the assembly of the sidewall part and the cover part form the second housing structure. The sensor 300 comprises in the housing a support structure 340 and a PCB part 330. The support structure 340 is coupled to the PCB 330 by a reflow process. The combination of support structure and PCB is attached to an edge of a vertical surface of the first housing part by a glue, weld or epoxy.

The cover part 312A comprises at least two openings and at least two electrical connection pins 312B. The at least two electrical connection pins 312B pass through the openings in the cover part 312A and are affixed in the openings by a non-conductive hermetic sealing material 312C. The springy electrical connection elements 350 electrically connect circuitry on the PCB 330 to the electrical connection pins 312B. In this embodiment the springy electrical connection elements 350 are in the form of U-shaped flat springs. The flat springs are reflowed to contact surfaces of the PCB 330. During assembly of the first and second housing structure, the flat springs are pressed against onto respective ends of the connecting pins 312B which project into the interior of the housing. Instead of U-shaped flat springs, other shapes might be used for example S-shaped flat springs. It might further be possible to use conductive rubber or conductive elastomeric composites as springy electrical connection elements.

In figure 3, the thickness of the respective sections of the membrane part are indicated. From the centre of the membrane part to the outside, the membrane part comprises the following sections: membrane section 316C, an annular rigid part 316B1, an annular bending part 316B2, 316B3 and annular affixing section 316A. The membrane section 316A has a thickness a. The annular rigid part is angled with respect to the plane of the membrane section and has a thickness b, wherein thickness b > thickness a. The annular bending part has two annular sections. The first section 316B2 is substantially parallel to the membrane section 316A and has a thickness c. The second section 316B3 is angled with respect to the first section 316B2 and has a thickness d. Thickness c and d are both thinner than the thickness b and thicker than thickness a. If a mounting force is acting on or via the bottom part 314, the force has to pass first the annular bending part and subsequently the annular rigid part before a resultant of the force will be acting on the membrane section. As the bending part is thinner than the rigid part, the main part of the mounting force will result in bending of the bending part and only a small remaining part will act on the rigid part. Consequently, an even smaller part of the force acting on the remaining part will pass the rigid part and influence stress in the membrane section. In this way, the sensitivity for both point (asymmetrical) and uniform (concentric) forces acting on the exterior of the hermetic housing is reduced significantly by the wave-like section, which comprises the annular rigid part and the annular bending part.

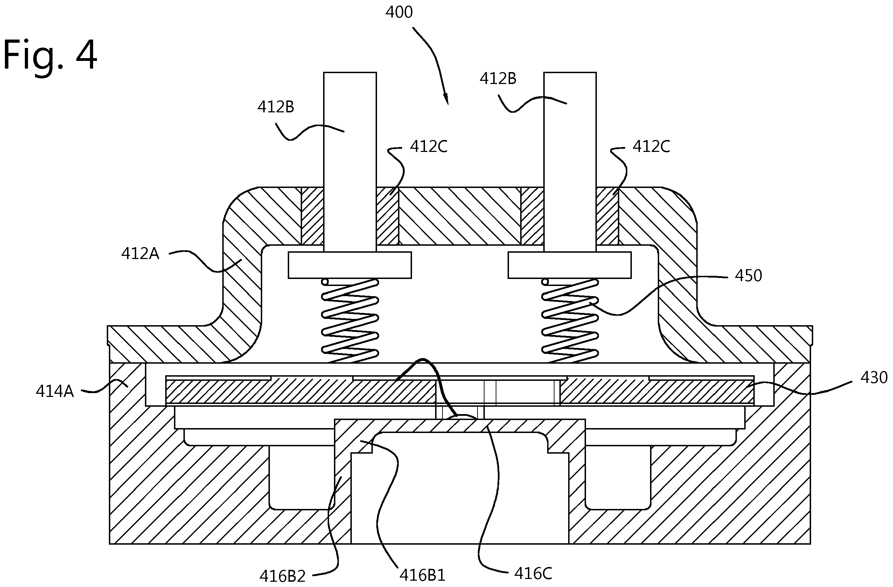

Figure 4 shows schematically a sectional view of a third embodiment of hermetic pressure sensor 400 according to the present application. This embodiment differs from the previous embodiment in that the first housing part is out of one piece of metal and comprises both the bottom of the housing and the membrane section 416C. An advantage of this embodiment is that it is less complex. A disadvantage is that the membrane could easily be reached through the large port by objects and thus be damaged. To reduce the influence of forces acting on the housing, the membrane section 416C is surrounded by an annular rigid section 416B1. An annular bending section 416 connects the annular rigid section to an annular outer section 414A of the first housing part. The annular bending section 416B2 has a thickness which is smaller than the thickness of the rigid part 416B1. Furthermore, the bending section 416B2 is angled with respect to the membrane section 416C. The way to reduce the influence is similar to that in the previous embodiments. In this embodiments, the springy electrical connection elements are open-coil springs 450 with a central axis perpendicular to the PCB 430.

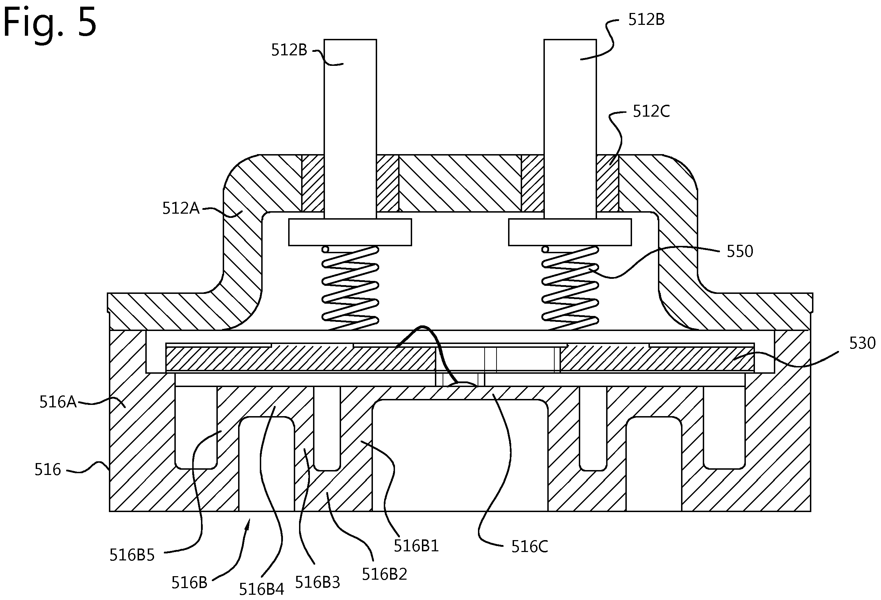

Figure 5 shows schematically a sectional view of a fourth embodiment of a pressure sensor with an hermetic housing with reduced sensitivity for forces acting on the hermetic housing. This embodiment differs from the third embodiment in the wave-like section 516B which couples the membrane section 516C to the annular outer section 516A. In this embodiment, the mechanical path between the annular outer section and membrane section is increased further. The full metal bottom part 516 comprises an annular wave-like section which comprises from the membrane section 516C of the bottom part 516 to the outer section 516A of the bottom part 516 subsequently a first rigid part 516B1, 516B2, a first bending part 516B3, a second rigid part 516B4 and a second bending part 516B5. The membrane section 516C has the thinnest thickness of the bottom part 516. The bending parts 516B3, 516B5 have a thickness smaller than the rigid parts 516B1, 516B2 and 516B4. The first rigid part comprises a vertical part 516B1 and a horizontal part 516B2. In general, the membrane section has to be surrounded by a rigid part to reduce the influence of parasitic effects in the measured pressure signal. If the vertical part 516B1 has a comparable thickness as the membrane section 516C, a fluid pressure acting on the bottom part will bend both the membrane section and the vertical part. However the bending of the vertical part will influence the stress in the membrane section and thus influence the measured fluid pressure. By having a rigid part surrounding the membrane section, this kind of distortion in the measured fluid pressure in reduced significantly.

Method of assembling a hermetic pressure sensor, not being part of the claimed invention, comprises the following actions. Firstly, a first housing structure is provided. The first housing structure could be a one part piece as disclosed in Figs. 4 and 5 or a two part piece comprising the membrane part and the bottom part as disclosed in Figs. 2 and 3. In the latter case, the membrane part is hermetically coupled to the bottom part by an annular weld. Then, the PCB is disposed/attached in/to the first housing structure. For the embodiment shown in Figs. 2 and 3, a support structure is already attached to the PCB by for example a reflow process. The support structure is after placing the PCB in the first housing structure attached to the first housing structure by means welding or gluing. By means of a bonding process, the strain sensing elements on the membrane are electrically coupled to the PCB. In case of the embodiment disclosed in Fig. 2, an alignment structure 145 is positioned on the PCB and open-coil springs are positioned in the alignment structure. In the other embodiments, springy electrical connection elements are already attached to the PCB by a reflow process. Then, the second housing structure is provided and positioned above the PCB to form a closed cavity in which the PCB and strain gages are located. Now a stack of components is created the first housing structure, the PCB, springy electrical connection elements and the second housing structure. Finally, the second housing structure forming a cover over the first housing structure is hermetically connected to the first housing structure by means of an annular weld.

The presented embodiments are suitable for transmission application in the automotive industry which measure pressure in an operating range of 0 - 20 Bar and which withstands pressure spikes in the measured medium up to 120 Bar. For other applications the operating range could be 0 - 70 Bar. Especially for measuring relative low pressures it is important that there is a constant internal pressure in the housing. The proposed designs consist of fewer potential leak paths by reducing the amount of required welds and the weld length. Furthermore, glass-to-metal seals are only used in the openings of the second housing part around the connection pins. As this side is not subjected to the fluid pressure to be measured, the risk of damage to the glass-to metal seals due to fluid pressure variations is negligible. The design is cost effective as it consists of a minimum amount of parts and processes, thereby reaching irreducible complexity: smallest amount of components possible to still fulfil the function and be manufacturable.

Due to the wave-like section the sensor copes with non-uniform forces on the sensor housing without significant effect on the output signal. It should be noted that the concept could also be applied in other type of pressure sensors which are used in an harsh environment. The disclosed housings are disc-shaped, with a height around 1 cm. For other applications, the housing could be in the form of a plug, wherein the first housing structure comprises an external thread to mount the sensor in an opening of a device.

It should be noted that the described embodiment all comprises springy electrical connection elements to couple the connection pint to the PCB. The springy electrical connection elements could be replaced by a flex foil. However, this embodiment requires more processes to manufacture the sensor and consequently the manufacturing process more complex.

## Claims

1. A hermetic pressure sensor (100) for measuring a fluid pressure, the pressure sensor comprises:
- a first housing structure (114, 116) comprising a metal membrane section (116C) to be exposed to the fluid pressure;
- a second housing structure (112) comprising a housing part (112A) with at least two openings and electrical connection pins (112B) passing through the at least two openings;
- at least one strain sensing element (120, 320);
- a PCB (130) electrically coupled to the electrical connection pins (112B), **characterized in that**,
the at least one strain sensing element (120) is attached to the membrane section (116C) and electrically coupled to the PCB (130) by bonding wires to mechanically decouple the membrane section (116C) for force acting on the PCB, the housing part (112A) of the second housing structure (112) is a metal housing part configured to form a cover over the first housing part, the electrical connection pins (112B) are affixed in the at least two openings by a non-conductive and hermetic sealing material (112C), springy electrical connection elements (150) or a flex foil (350) couple electrically the connection pins to the PCB, the first housing structure and the second housing structure are hermetically connected to each other to form a hermetically closed cavity in which the PCB and the at least one strain sensing element are located, and the first housing structure comprises a fluid facing outer surface to be exposed to the fluid pressure wherein the fluid facing outer surface is a full metal outer surface.

2. The pressure sensor according to claim 1, wherein the first housing structure comprises a bottom part (114) and a membrane part (116), the bottom part comprises a pressure supply opening (114C), the membrane part (116) comprising the membrane section (116C) is hermetically connected to the bottom part (114), the membrane section (116C) is in pressure contact with the fluid via a cavity (260) between the base part and the membrane part and the pressure supply opening (114C).

3. The pressure sensor according to claim 2, wherein the bottom part (114) and the membrane part (116) being hermetically connected by an annular weld.

4. The pressure sensor according to any of the claim 1 - 3, wherein the first housing structure and the second housing structure are hermetically connected by an annular weld.

5. The pressure sensor according to any of the claims 1 - 4, wherein the first housing structure comprises around the membrane section (116C) an annular wave-like section (116B).

6. The pressure sensor according to claim 5, wherein a cross section of the annular wave-like section comprises at least one U-turn-like shape.

7. The pressure sensor according to any of the claims 1 - 6, wherein the first housing structure further comprises an annular base part, an annular rigid part and an annular bending part, the membrane section is joined via the rigid part and the bending part to the base part, the rigid part having a thickness larger than the bending part.

8. The pressure sensor according to claim 7, wherein the bending part is at an angle with respect to the membrane section.

9. The pressure sensor according to claim 1, wherein a springy electrical connection element is one selected from a group comprising an open-coil helical spring, U-shaped flat spring, S-shaped flat spring, conductive rubber and other conductive elastomeric composites.

10. The pressure sensor according to any of the claims 1 - 9, wherein the hermetic housing is disk-shaped.

11. The pressure sensor according to any of the claims 1 - 10, wherein the strain sensing element is a micro fused silicon strain gage.

## Patentansprüche

1. Hermetischer Drucksensor (100) zum Messen eines Fluiddrucks, wobei der Drucksensor umfasst:
- eine erste Gehäusestruktur (114, 116), die einen Metallmembranabschnitt (116C) umfasst, der dem Fluiddruck ausgesetzt werden soll;
- eine zweite Gehäusestruktur (112), die ein Gehäuseteil (112A) mit mindestens zwei Öffnungen und elektrischen Verbindungsstiften (112B), die durch die mindestens zwei Öffnungen verlaufen, umfasst;
- mindestens ein Dehnungserfassungselement (120, 320) ;
- eine Leiterplatte (130), die elektrisch mit den elektrischen Verbindungsstiften (112B) gekoppelt ist,
**dadurch gekennzeichnet, dass**
das mindestens eine Dehnungserfassungselement (120) an dem Membranabschnitt (116C) angebracht und mit der Leiterplatte (130) durch Bonddrähte elektrisch gekoppelt ist, um den Membranabschnitt (116C) für eine auf die Leiterplatte einwirkende Kraft mechanisch zu entkoppeln, das Gehäuseteil (112A) der zweiten Gehäusestruktur (112) ein Metallgehäuseteil ist, das ausgelegt ist, um einen Deckel über dem ersten Gehäuseteil zu bilden, die elektrischen Verbindungsstifte (112B) in den mindestens zwei Öffnungen durch ein nicht leitendes und hermetisches Abdichtungsmaterial (112C) befestigt sind, federnde elektrische Verbindungselemente (150) oder eine flexible Folie (350) die Verbindungsstifte elektrisch mit der Leiterplatte koppeln, die erste Gehäusestruktur und die zweite Gehäusestruktur hermetisch miteinander verbunden sind, um einen hermetisch geschlossenen Hohlraum zu bilden, in dem sich die Leiterplatte und das mindestens eine Dehnungserfassungselement befinden, und die erste Gehäusestruktur eine dem Fluid zugewandte Außenfläche umfasst, die dem Fluiddruck ausgesetzt werden soll, wobei die dem Fluid zugewandte Außenfläche eine Außenfläche vollständig aus Metall ist.

2. Drucksensor nach Anspruch 1, wobei die erste Gehäusestruktur ein Bodenteil (114) und ein Membranteil (116) umfasst, das Bodenteil eine Druckzufuhröffnung (114C) umfasst, das Membranteil (116), das den Membranabschnitt (116C) umfasst, hermetisch mit dem Bodenteil (114) verbunden ist, der Membranabschnitt (116C) über einen Hohlraum (260) zwischen dem Bodenteil und dem Membranteil und der Druckzufuhröffnung (114C) in Druckkontakt mit dem Fluid steht.

3. Drucksensor nach Anspruch 2, wobei das Bodenteil (114) und das Membranteil (116) durch eine ringförmige Schweißnaht hermetisch verbunden sind.

4. Drucksensor nach einem der Ansprüche 1 - 3, wobei die erste Gehäusestruktur und die zweite Gehäusestruktur durch eine ringförmige Schweißnaht hermetisch verbunden sind.

5. Drucksensor nach einem der Ansprüche 1 - 4, wobei die erste Gehäusestruktur um den Membranabschnitt (116C) einen ringförmigen wellenartigen Abschnitt (116B) umfasst.

6. Drucksensor nach Anspruch 5, wobei ein Querschnitt des ringförmigen wellenförmigen Abschnitts mindestens eine U-förmige Form umfasst.

7. Drucksensor nach einem der Ansprüche 1 - 6, wobei die erste Gehäusestruktur ferner ein ringförmiges Basisteil, ein ringförmiges starres Teil und ein ringförmiges Biegeteil umfasst, wobei der Membranabschnitt über das starre Teil und das Biegeteil mit dem Basisteil verbunden ist, wobei das starre Teil eine Dicke aufweist, die größer als das Biegeteil ist.

8. Drucksensor nach Anspruch 7, wobei das Biegeteil in Bezug auf den Membranabschnitt einen Winkel aufweist.

9. Drucksensor nach Anspruch 1, wobei ein federndes elektrisches Verbindungselement ein ausgewähltes aus einer Gruppe ist, die eine offene Schraubenfeder, eine U-förmige Blattfeder, eine S-förmige Blattfeder, leitfähiges Gummi und andere leitfähige elastomere Verbundstoffe umfasst.

10. Drucksensor nach einem der Ansprüche 1 - 9, wobei das hermetische Gehäuse scheibenförmig ist.

11. Drucksensor nach einem der Ansprüche 1 - 10, wobei das Dehnungserfassungselement ein Dehnungsmesser aus mikroverschmolzenem Silizium ist.

## Revendications

1. Capteur de pression hermétique (100) pour mesurer une pression de fluide, le capteur de pression comprend :
- une première structure de boîtier (114, 116) comprenant une section de membrane métallique (116C) qui doit être exposée à la pression de fluide ;
- une seconde structure de boîtier (112) comprenant une partie de boîtier (112A) ayant au moins deux ouvertures et des broches de raccordement électrique (112B) passant à travers les deux, ou plus, ouvertures ;
- au moins un élément de détection de contrainte (120, 320) ;
- une carte de circuit imprimé (PCB) (130) couplée électriquement aux broches de raccordement électrique (112B),
**caractérisé en ce que**
le ou les éléments de détection de contrainte (120) sont fixés à la section de membrane (116C) et couplés électriquement à la carte de circuit imprimé (130) par des fils de liaison pour désolidariser mécaniquement la section de membrane (116C) d'une force agissant sur la carte de circuit imprimé, la partie de boîtier (112A) de la seconde structure de boîtier (112) est une partie de boîtier métallique configurée pour former un couvercle sur la première partie de boîtier, les broches de raccordement électrique (112B) sont fixées dans les deux, ou plus, ouvertures par un matériau d'étanchéité non conducteur et hermétique (112C), des éléments de raccordement électrique élastiques (150) ou une feuille flexible (350) couplent électriquement les broches de raccordement à la carte de circuit imprimé, la première structure de boîtier et la seconde structure de boîtier sont raccordées hermétiquement l'une à l'autre pour former une cavité fermée hermétiquement dans laquelle la carte de circuit imprimé et le ou les éléments de détection de contrainte sont situés, et la première structure de boîtier comprend une surface externe orientée vers le fluide qui doit être exposée à la pression de fluide dans lequel la surface externe orientée vers le fluide est une surface externe complètement métallique.

2. Capteur de pression selon la revendication 1, dans lequel la première structure de boîtier comprend une partie inférieure (114) et une partie de membrane (116), la partie inférieure comprend une ouverture d'alimentation en pression (114C), la partie de membrane (116) comprenant la section de membrane (116C) est raccordée hermétiquement à la partie inférieure (114), la section de membrane (116C) est en contact par pression avec le fluide par le biais d'une cavité (260) entre la partie de base et la partie de membrane et l'ouverture d'alimentation en pression (114C).

3. Capteur de pression selon la revendication 2, dans lequel la partie inférieure (114) et la partie de membrane (116) sont raccordées hermétiquement par une soudure annulaire.

4. Capteur de pression selon l'une quelconque des revendications 1 - 3, dans lequel la première structure de boîtier et la seconde structure de boîtier sont raccordées hermétiquement par une soudure annulaire.

5. Capteur de pression selon l'une quelconque des revendications 1 - 4, dans lequel la première structure de boîtier comprend, autour de la section de membrane (116C), une section annulaire en forme de vague (116B).

6. Capteur de pression selon la revendication 5, dans lequel une section transversale de la section annulaire en forme de vague comprend au moins une forme semblable à un virage en U.

7. Capteur de pression selon l'une quelconque des revendications 1 - 6, dans lequel la première structure de boîtier comprend en outre une partie de base annulaire, une partie rigide annulaire et une partie de courbure annulaire, la section de membrane est unie, par le biais de la partie rigide et de la partie de courbure, à la partie de base, la partie rigide ayant une épaisseur plus importante que celle de la partie de courbure.

8. Capteur de pression selon la revendication 7, dans lequel la partie de courbure forme un angle avec la section de membrane.

9. Capteur de pression selon la revendication 1, dans lequel un élément de raccordement électrique élastique est un élément sélectionné dans un groupe comprenant un ressort hélicoïdal ouvert, un ressort plat en forme de U, un ressort plat en forme de S, un caoutchouc conducteur et d'autres composites élastomères conducteurs.

10. Capteur de pression selon l'une quelconque des revendications 1 - 9, dans lequel le boîtier hermétique est en forme de disque.

11. Capteur de pression selon l'une quelconque des revendications 1 - 10, dans lequel l'élément de détection de contrainte est une jauge de contrainte microfusionnée en silicium.
